# EUROPÄISCHE PATENTANMELDUNG

(11) **EP 1 553 483 A2**
(43) Veröffentlichungstag der Anmeldung: **13.07.2005**
(21) Anmeldenummer: 04105946.0
(22) Anmeldetag: 19.11.2004
(51) Int. Cl.: G06F 3/033

(54) **Verfahren zur Steuerung von insbesondere den Komfortfunktionen eines Kraftfahrzeuges zugeordneten Menüs**

(30) Priorität: 07.01.2004 DE 102004001114
(71) Anmelder: Robert Bosch GmbH, 70442 Stuttgart (DE)
(72) Erfinder: Kossira, Martin, 71672, Marbach Am Neckar (DE)

(57) **Zusammenfassung**

Um ein Verfahren zur Steuerung von insbesondere den Komfortfunktionen eines Kraftfahrzeuges zugeordneten Menüs, wie Kommunikation, Navigation, Klima und Entertainment, durch einen eine fühlbare, insbesondere mechanisch oder magnetisch erzeugte, Rasterung besitzenden und somit als Inkrementengeber ausgeführten Drehgeber (3), zu schaffen, durch das die durch die Rasterung des als Inkrementengeber ausgebildeten Drehgebers hervorgerufene Totzeit in der Regelschleife eliminiert wird, so dass für den Benutzer die Aufgabe hinsichtlich der Positionierung der Markierung auf dem gewünschten Listenelement erheblich erleichtert wird, ist vorgesehen, dass zur Eliminierung eine aus der Rasterung resultierenden Totzeit der Regelschleife die Bewegung des Drehgebers (3) feiner als durch die Rasterung vorgegeben erfasst wird.

## Beschreibung

### Technisches Gebiet

Die Erfindung betrifft ein Verfahren zur Steuerung von insbesondere den Komfortfunktionen eines Kraftfahrzeuges zugeordneten Menüs, wie Kommunikation, Navigation, Klima und Entertainment, durch einen, eine fühlbare, insbesondere mechanisch oder magnetisch erzeugte, Rasterung besitzenden und somit als Inkrementengeber ausgeführten Drehgeber, wobei die Information über eine Drehbewegung zumindest in der Auflösung der Rasterung geliefert wird und nach dem Aufrufen und Anzeigen des jeweiligen Menüs auf einem Bildschirm aus dem jeweiligen Menü Elemente ausgewählt oder Werteinstellungen vorgenommen werden.

### Stand der Technik

Bei Kraftfahrzeugen ist es allgemein bekannt, dass diese mit Einrichtungen ausgestattet sind, die beispielsweise dem Komfort, der Information und der Unterhaltung sowohl des Fahrers als auch der Insassen des Kraftfahrzeuges dienen. Hierzu gehören unter anderem die Klimaanlage, das Autoradio verbunden mit einer Abspieleinheit für Musikkassetten und CDs und auch ein Navigationsgerät. Um diese Einrichtungen zu bedienen, sind für den Fahrer diesen Einrichtungen leicht zugängliche, diesen Einrichtungen zugeordnete Bedienelemente vorgesehen, die beim Autoradio zur Einstellung des Sendebereiches, der Lautstärke, auch unter Berücksichtigung der vorderen und hinteren aber auch der rechten und linken Lautsprecher, von Sendern, die Verkehrsnachrichten senden, zur Ausgabe von abgespeicherten Verkehrsinformationen und so weiter dienen. Analog ist eine Vielzahl von Bedienelementen zum Beispiel auch für die Klimaanlage notwendig, durch die die Einstellung der Temperatur sowohl im Bereich des Fahrers als auch des Beifahrers, der Sitzheizung für den Fahrer- und Beifahrersitz aber auch im Fond sowie eine aktive Sitzbelüftung vom sowie ebenfalls im Fond, um nur einige Varianten anzugeben, vorgenommen werden kann. Nachteilig ist hierbei jedoch stets, dass der Fahrer während des Fahrens die Bedienelemente oftmals ertasten muss, um die jeweilige, dem Komfort, der Information und der Unterhaltung zugeordnete Einzelkomponente zu bedienen, so dass es nicht ausbleibt, dass der Fahrer vom Verkehrsgeschehen abgelenkt wird, was sich negativ auf die Verkehrssicherheit im Straßenverkehr auswirkt.

Um diesen Nachteil zu vermeiden, kommen im Zuge der ständigen Weiterentwicklung von Kraftfahrzeugen Multifunktionselemente für Navigationssysteme, Bordcomputer, Audioanlagen und Kommunikationssysteme zur Anwendung, die einen zentralen Bedienknopf besitzen, der eine Betätigung durch Drehen, Drücken und eventuell zusätzlich seitliches Verschieben oder Kippen nach Art eines Joysticks ermöglicht. Dabei ist durch diese Multifunktionselemente ein Bordcomputer steuerbar, der verschiedene, zum Teil hierarchisch angelegte Eingabefelder besitzt, die an einem Bildschirm angezeigt werden, wobei derartige Multifunktionselemente ein einfaches Wechseln der Menüebene ermöglichen.

Im Zuge der ständigen Weiterentwicklung von modernen Kraftfahrzeugen ist aber auch ein System bekannt, das als "i-Drive" alle Innovationen zusammenfasst, die den Fahrer unterstützen. Dieses System teilt die Innovationen in zwei Zonen, und zwar in die Fahrfunktionen und in die Komfortfunktionen auf. Während die Fahrfunktionen ergonomisch direkt um das Lenkrad angeordnet sind und somit ohne abgelenkt zu werden eine einfache Bedienung ermöglichen, befinden sich die Komfortfunktionen in der Mitte zwischen den Vordersitzen, insbesondere auf der Mittelarmlehne der Tunnelkonsole des Kraftfahrzeuges, so dass sie gut erreichbar sind. Mit einem zentral zwischen den Vordersitzen, insbesondere auf der Mittelarmlehne der Tunnelkonsole angeordneten Bedienelement wird beispielsweise ein Navigationssystem, ein CD-Wechsler oder ein Kommunikationssystem gesteuert, wobei das zugehörige, im Armaturenbrett angeordnete Control-Display und somit der Bildschirm unmittelbar im Blickfeld des Fahrers liegt. Dabei werden aus dem im Bildschirm angezeigten, beispielsweise der Navigation, der Kommunikation oder der Klimaanlage zugeordneten Menü, nachdem ein Aufruf erfolgte, die Menüpunkte, also die Elemente ausgewählt, die zum Beispiel der Sitzbelüftung oder Sitzheizung zugeordnet sind.

Zur Erfüllung dieser Aufgabe kommen für die Menübedienung Drehgeber (Controller) zur Anwendung, die im Wesentlichen als Inkrementengeber ausgebildet sind. Diese besitzen somit eine fühlbare Rasterung. Dabei wird die Information über eine Drehbewegung auch nur in der Auflösung der Rasterung geliefert, die in der Regel jeweils erst nach dem Überwinden der mechanischen Schwelle zwischen den Einraststellungen vorliegt. Dementsprechend erfolgt die über den Drehgeber gesteuerte Positionierung einer Markierung innerhalb einer Liste auch gerastet. Mit leichter Zeitverzögerung d.h. einer gewissen Totzeit zur Drehbewegung springt die Markierung von einem Element zum nächsten, also von einem Menüpunkt zum folgenden. Bei Darstellungen, in denen eine Markierung nicht auf einer statischen Linie bewegt wird, sondern die Liste selbst elementweise "springt", was zum Beispiel dann eintreten kann, wenn die Markierung den Rand des sichtbaren Bereiches der Liste erreicht hat, zeigt die so ebenfalls gerastete optische Rückkopplung die Bewegungsrichtung der Liste oftmals nur unzureichend. Die Bewegung der Liste mittels Zwischenschritten feiner zu animieren, führt zwar zur Verbesserung der Erkennung der Bewegungsrichtung, sie bringt aber Nachteile bei schnellen Drehbewegungen mit sich, da die einzelnen Animationsschritte eine gewisse Zeit benötigen. Zudem wird die Bewegungsrichtung erst nach dem ersten Drehgeberschritt sichtbar.

### Darstellung der Erfindung, Aufgabe, Lösung, Vorteile

Es ist Aufgabe der vorliegenden Erfindung, ein Verfahren zur Steuerung von insbesondere den Komfortfunktionen eines Kraftfahrzeuges zugeordneten Menüs, entsprechend dem Oberbegriff von Anspruch 1 zu schaffen, durch das die durch die Rasterung des als Inkrementengeber ausgebildeten Drehgebers hervorgerufene Totzeit in der Regelschleife eliminiert wird, so dass für den Benutzer die Aufgabe hinsichtlich der Positionierung der Markierung auf dem gewünschten Listenelement erheblich erleichtert wird.

Diese Aufgabe wird erfindungsgemäß durch ein Verfahren mit den in Anspruch 1 gekennzeichneten Merkmalen gelöst. Dadurch, dass zur Eliminierung der aus der Rasterung resultierenden Totzeit der Regelschleife die Bewegung des Drehgebers feiner als durch die Rasterung vorgegeben erfasst wird, wird erreicht, dass für den Benutzer die Aufgabe hinsichtlich der Positionierung der Markierung auf dem gewünschten Listenelement in Verbindung mit einer schnelleren optischen Rückkopplung an den Benutzer erheblich erleichtert wird.

Hierbei erfolgt in einer bevorzugten Ausführungsform die Bewegung der Markierung und/oder der Liste in Schritten, die erheblich kleiner sind als ein jeweiliges Element. Damit wird ein jeweiliger Menüpunkt und die aus der Erfassung der Bewegung des Drehgebers - nunmehr als Drehgeber mit Positions-Fein-Ausgabe - resultierende Information für eine schnellere optische Rückkopplung an den Benutzer verwendet. Dies erfolgt insbesondere deshalb, weil beispielsweise die Bewegungsrichtung selbst bei schnellen Drehbewegungen stets sichtbar ist, und zwar auch dann, wenn bei Darstellungen, in denen eine Markierung nicht auf einer statischen Linie bewegt wird, sondern die Liste selbst bewegt wird. Bei einem erfindungsgemäßen Drehgeber handelt es sich um einen insbesondere zentral zwischen den Vordersitzen, insbesondere auf der Mittelarmlehne der Tunnelkonsole des Kraftfahrzeuges angeordneten oder gerätintegrierten,Drehgeber, nämlich den Controller.

So ist es vorteilhaft für eine einfache Implementierung, wenn die Informationen der jeweiligen Position des Drehgebers mit Positions-Fein-Ausgabe um ein ganzzahliges Vielfaches feiner sind als die fühlbare Rasterung und dabei jede Rast-Stellung exakt einer Position zugeordnet wird. Dann kann die Bewegung der Markierung und/oder der Liste unmittelbar aus der Information der jeweiligen Position berechnet werden. Die für die Auswahl eines Elements notwendige Positionierung der Markierung exakt auf einem Element und damit auf einem Menüpunkt wird dann direkt aus der Rasterung des Drehgebers mit Positions-Fein-Ausgabe ermittelt. Unter Markierung ist insbesondere ein Cursor zu verstehen.

Das erfindungsgemäße Verfahren ist auch bei Drehgebern mit einstellbarer Rasterung sowie bei Drehgebern mit variabler Kraftrückkopplung - "i-Drive" - bei Erzielung der durch die Erfindung beabsichtigten Vorteile anwendbar.

Eine besonders vorteilhafte Ausgestaltung besteht darin, dass durch Anordnung des zentral zwischen den Vordersitzen, insbesondere auf der Mittelarmlehne der Tunnelkonsole des Kraftfahrzeuges angeordneten Drehgebers auf der Mitttelarmlehne der Tunnelkonsole der Drehgeber zu seiner Bedienung sowohl dem Fahrer als auch dem Beifahrer zur Verfügung steht.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung an Ausführungsbeispielen anhand der beigefügten Zeichnungen näher erläutert. Es zeigen:
- Figur 1: eine schematische Darstellung des Drehgebers mit Positions-Fein-Ausgabe in Verbindung mit einem diesem zugeordneten Bildschirm (Fig. 1a);
- Figur 2: eine skizzenhafte Darstellung der Position des Drehgebers nach Figur 1 zur Listenposition und
- Figur 3: ein skizzenhafte Darstellung einer Beispielanimation, die aus einem schnellen Drehen des Drehgebers nach Figur 1 resultiert.

### Bester Weg zur Ausführung der Erfindung

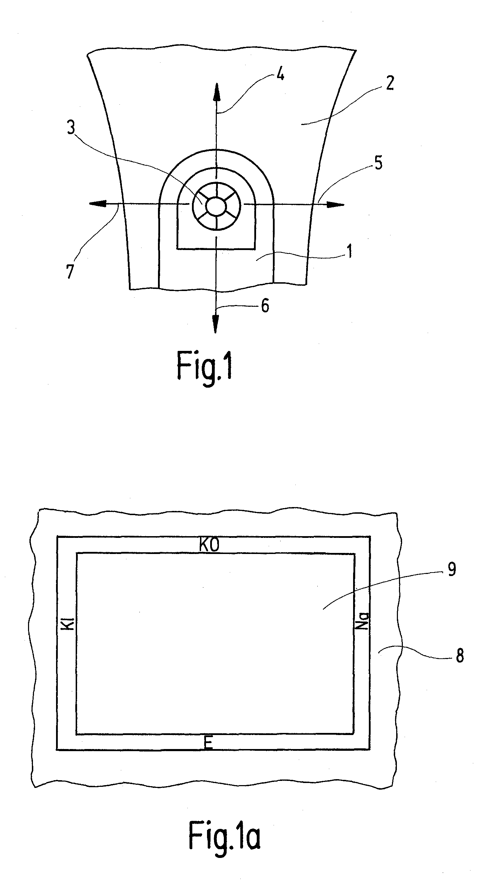

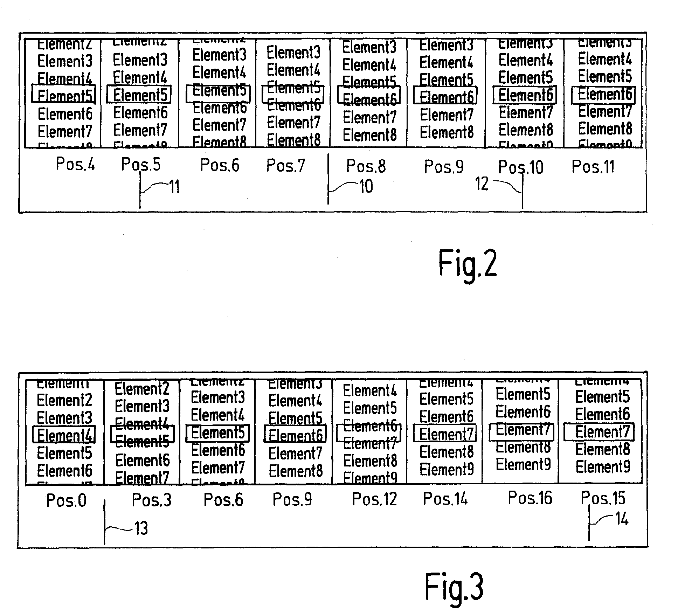

Die Figur 1 zeigt die Anordnung eines auf der Mittelarmlehne 1 einer Tunnelkonsole 2 eines Kraftfahrzeuges angeordneten, eine fühlbare Rasterung besitzenden Drehgebers 3, dem Controller. Dabei kann dieser sowohl verschoben als auch gedreht werden. Während durch seine Verschiebung ein Aufrufen des jeweiligen Menüs vorgenommen wird, erfolgt durch das Drehen des Drehgebers 3 eine Auswahl der Elemente als Menüpunkte des jeweiligen Menüs, wie sie beispielhaft aus den skizzenhaften Darstellungen der Figuren 2 und 3 hervorgehen. Dabei ist in Durchführung des Verfahrens nach der Erfindung zur Eliminierung der aus der Rasterung resultierenden Totzeit der Regelschleife die Bewegung des Drehgebers 3 feiner als durch die Rasterung vorgegeben, so dass die Bewegung der Markierung beziehungsweise der Liste (Figur 2 und 3) in Schritten erfolgt, die erheblich kleiner sind als ein jeweiliges Element und damit ein jeweiliger Menüpunkt. Das aber bedeutet, dass der Drehgeber 3 ein Drehgeber mit Positions-Fein-Ausgabe ist.

Wie die Figur 1 weiterhin zeigt, ist der Drehgeber 3 mit Positions-Fein-Ausgabe in vier um 90° zueinander versetzt verlaufende Richtungen 4, 5, 6, 7 verschiebbar, von denen in Übereinstimmung mit den Menüangaben des im Armaturenbrett 8 vorgesehenen Bildschirms 9 die Richtung 4 der Verschiebung der Kommunikation KO, und in die Richtung 5 der Navigation Na, die Richtung 6 dem Entertainment E und die Richtung 7 dem Klima Kl als jeweiliges Menü zugeordnet ist. Dabei ist der in Fig. 1a schematisch dargestellten Bildschirm 9 zusätzlich zu dem ebenfalls im Armaturenbrett 8 angeordneten, nicht weiter dargestellten Display angeordnet, dem bei der großen Palette der zur Verfügung stehenden Angaben beispielsweise Angaben zum jeweiligen Benzinverbrauch entnehmbar sind.

Die skizzenhafte Darstellung nach Figur 2 geht von den Positionen 4 bis 11 des Drehgebers 3 mit Positions-Fein-Ausgabe gemäß Figur 1 bei seiner Drehbewegung aus und zeigt die jeweilige Zuordnung der Position des Drehgebers 3 zur Listenposition. Dabei ist ersichtlich, dass in den Positionen 5 und 10 nach dem Überwinden der mechanischen Schwelle 10 und damit in der den Raststellungen 11, 12 des eine Rasterung besitzenden Drehgebers 3 die Information über die Drehbewegung, die in der Auflösung der Rasterung geliefert wird, vorliegt (Element 5 und 6). Es ist dieser Figur aber auch entnehmbar, dass bei jeder weiteren Position des Drehgebers 3, also zwischen den Positionen 5 und 10, die jeweilige Listenposition in Abhängigkeit von der Drehbewegung und damit der jeweiligen Position des Drehgebers 3 als Information im Rahmen einer schnelleren optischen Rückkopplung an den Benutzer vorliegt.

Der Beispielanimation gemäß Figur 3 liegt ein schnelles Drehen des Drehgebers 3 mit Positions-Fein-Ausgabe nach Figur 1 zugrunde, wobei die Drehrate des Drehgebers 3 größer ist als die maximale Bildrate. Dabei kann dieser Figur entnommen werden, dass der Drehgeber 3, nachdem dieser ausgehend von seiner Grundposition 13 zu Beginn seiner Drehung durch den Benutzer die Position 16 im Zuge seines schnellen Drehens erreicht hat, in der der Benutzer die Drehung des Drehgebers 3 beendet hat und diesen loslässt, in die Raststellung 14 springt, die der Position 15 entspricht und somit eine schnellere Information über die Drehbewegung, die in der Auflösung der Rasterung geliefert wird, vorliegt (Element 7). Aber auch in jeder weiteren Position des Drehgebers 3, beginnend mit der Position 0, also mit der Grundposition 13, liegt die jeweilige Listenposition in Abhängigkeit von der jeweiligen Position des Drehgebers 3 bei seinem schnellen Drehen als Information im Rahmen der optischen Rückkopplung an den Benutzer vor.

## Patentansprüche

1. Verfahren zur Steuerung von insbesondere den Komfortfunktionen eines Kraftfahrzeuges zugeordneten Menüs, wie Kommunikation, Navigation, Klima und Entertainment, durch einen eine fühlbare, insbesondere mechanisch oder magnetisch erzeugte, Rasterung besitzenden und somit als Inkrementengeber ausgeführten Drehgeber (3), wobei die Information über eine Drehbewegung zumindest in der Auflösung der Rasterung geliefert wird und nach dem Aufrufen und Anzeigen des jeweiligen Menüs auf einem Bildschirm im jeweiligen Menü Elemente ausgewählt oder Werteinstellungen vorgenommen werden, **dadurch gekennzeichnet, dass** zur Eliminierung einer aus der Rasterung resultierenden Totzeit der Regelschleife die Bewegung des Drehgebers (3) feiner als durch die Rasterung vorgegeben erfasst wird.

2. Verfahren nach Anspruch 1, **dadurch gekennzeichnet, dass** die Bewegung einer Markierung und/oder einer Liste auf dem Bildschirm in Schritten erfolgt, die erheblich kleiner sind als ein jeweiliges Element und damit ein jeweiliger Menüpunkt und die aus der Erfassung der Bewegung des Drehgebers (3) resultierende Information für eine schnellere optische Rückkopplung an den Benutzer verwendet wird.

3. Verfahren nach einem der vorherigen Ansprüche, **dadurch gekennzeichnet, dass** in Verbindung mit einer einfacheren Implementierung die Informationen der jeweiligen Position des Drehgebers (3) mit Positions-Fein-Ausgabe um ein ganzzahliges Vielfaches feiner sind als die Rasterung und dabei jede Rast-Stellung exakt einer Position zugeordnet wird.

4. Verfahren nach Anspruch 3, **dadurch gekennzeichnet, dass** die Bewegung der Markierung und/oder der Liste unmittelbar aus der Information der jeweiligen Position berechnet wird.

5. Verfahren nach Anspruch 4, **dadurch gekennzeichnet, dass** die für die Auswahl eines Elements notwendige Positionierung der Markierung exakt auf einem Element und damit auf einem Menüpunkt direkt aus der Rasterung des Drehgebers (3) mit Positions-Fein-Ausgabe ermittelt wird.

6. Verfahren nach Anspruch 5, **dadurch gekennzeichnet, dass** eine Anwendung des Verfahrens bei Drehgebern mit einstellbarer Rasterung durchgeführt wird.

7. Verfahren nach Anspruch 5, **dadurch gekennzeichnet, dass** eine Anwendung des Verfahrens bei Drehgebern mit variabler Kraftrückkopplung durchgeführt wird.

8. Verfahren nach einem der Ansprüche 5 bis 7, **dadurch gekennzeichnet, dass** durch den Drehgeber (3) mit Positions-Fein-Ausgabe sowohl ein Aufrufen des jeweiligen Menüs, wie Kommunikation, Navigation, Klima und Entertainment vorgenommen wird als auch eine Auswahl von Elementen als Menüpunkt oder eine Einstellung von Werten erfolgt.

9. Verfahren nach Anspruch 8, **dadurch gekennzeichnet, dass** das Aufrufen des jeweiligen Menüs durch den Drehgeber (3) mit Positions-Fein-Ausgabe durch seine Verschiebung und die Auswahl der Elemente und somit der Menüpunkte des jeweiligen Menüs durch Drehen des Drehgebers (3) mit Positions-Fein-Ausgabe vorgenommen wird.

10. Verfahren nach Anspruch 9, **dadurch gekennzeichnet, dass** die Verschiebung des Drehgebers (3) mit Positions-Fein-Ausgabe in vier um 90° zueinander versetzt verlaufende Richtungen (4, 5, 6, 7) erfolgt, denen jeweils ein den Komfortfunktionen des Kraftfahrzeuges zugeordnetes Menü, wie Kommunikation, Navigation, Klima und Entertainment, zugeordnet wird.

11. Verfahren nach Anspruch 10, **dadurch gekennzeichnet, dass** durch Anordnung des zentral zwischen den Vordersitzen, insbesondere auf der Mittelarmlehne der Tunnelkonsole des Kraftfahrzeuges angeordneten Drehgebers (3) mit Positions-Fein-Ausgabe auf der Mittelarmlehne (1) der Tunnelkonsole (2) der Drehgeber (3) mit Positions-Fein-Ausgabe zu seiner Bedienung sowohl dem Fahrer als auch dem Beifahrer zur Verfügung steht.
